# EUROPEAN PATENT SPECIFICATION

(11) **EP 4 300 354 B1**
(45) Date of publication and mention of the grant of the patent: **06.08.2025**
(21) Application number: 22182643.1
(22) Date of filing: 01.07.2022
(51) Int. Cl.: G06K 19/077, B60C 19/00, B29D 30/00, H01Q 1/22

(54) **A PACK FOR MOUNTING AN ELECTRONIC DEVICE TO A TIRE**
MONTAGEPACK EINER ELEKTRONISCHEN VORRICHTUNG AN EINEN REIFEN
PACK DE MONTAGE D'UN DISPOSITIF ÉLECTRONIQUE SUR UN PNEU

(43) Date of publication of application: 03.01.2024
(73) Proprietor: Kordsa Teknik Tekstil A.S, 41310 Izmit / Kocaeli (TR); SES RFID Solutions GmbH, 40489 Düsseldorf (DE)
(72) Inventor: Taman Onen, Ezgi, 41310 Kocaeli (TR); Ilgun, Ahmet Burak, 41310 Kocaeli (TR); Askin, Sule, 41310 Kocaeli (TR); Fidan, Mehmet Saadettin, 41310 Kocaeli (TR); Yilmaz, Mehmet ilker, 41310 Kocaeli (TR); Cheng Lee, Yu, 40489 Düsseldorf (DE); Jung Chao, Ping, 40489 Duesseldorf (DE); Scattergood, Martin, 40489 Duesseldorf (DE)
(74) Representative: Dericioglu, E. Korhan

(56) References cited:
- US-A1- 2021 053 306
- US-B2- 9 361 571
- SICAD GROUP: "Eurocel Rubans Adhésifs", 30 September 2019 (2019-09-30), pages 1 - 44, XP093005911, Retrieved from the Internet <URL:https://www.eurocel.it/site/assets/files/3175/industrie_fr_09-2019.pdf> [retrieved on 20221207]

## Description

### Technical Field of the Present Invention

The present invention relates to a pack for mounting an electrical device to a tire and a method of mounting an electrical device to a tire. More specifically, the present invention relates to a pack for mounting an RFID tag to a tire and a method of mounting an RFID tag to a tire.

### Background of the Present Invention

It is known that incorporating electrical devices into tire structures has many advantages, such as tracking the tire during manufacture, transport and storing operations, as well as measuring physical parameters, such as temperature and pressure. Different types of electrical devices are used in the art for these purposes, with radio frequency communication between the tire and an external monitoring or interrogating device being the most common. Such communication systems often include a radio-frequency identification (RFID) tag, and a reader that communicates with the RFID tag. The RFID tag includes an antenna and an RFID chip. Thus, information from the reader is received through the antenna and stored in an RFID chip, and the information stored in the RFID chip is transmitted to the reader through the antenna. RFID devices may be read-only, write-only, or read-and-write devices.

RFID tags and other electrical devices may be mounted to a tire in a tire mountable apparatus. One of the problems associated with RFID tags is how to position and configure the antenna such that the data in the device are accurately transmitted to the information gathering device outside of the tire. The issues related to the use of RFID tags in tires are: (i) positioning the antenna as close to the outside of the tire as possible so that transmission efficiency is improved, (ii) positioning the antenna away from the metal reinforcing cords that interfere with the signal propagation, (iii) providing a device that can withstand the cyclic stresses in the operating tire, (iv) mounting the device onto the tire without overhandling and damaging it, and (v) ensuring the adhesion between the antenna, typically a metallic element, to the rubber material to secure it in place.

Examples of attaching electrical devices onto tires found in the state of the art are given below.

US 10,513,153 B2 discloses a tire including a circumferential tread and a radio-frequency identification (RFID) chip disposed below the circumferential tread. RFID chip is secured within the tire by vulcanization, adhesives, patches, or barbs.

US 8,833,409 B2 discloses a pneumatic tire having a tag carried by the reinforcing belt. The tag may be disposed in the crown portion, reinforcing cords, the splice of the reinforcing belt, or in a depression formed in the outer surface of the tire sidewall. The tag may be encapsulated with an encapsulation material, such as an epoxy, in order to secure the tag to the tire sidewall.

EP 1 516 502 A1 discloses a radio frequency antenna for use with a radio device embedded in a tire, comprising an antenna body and an insulating coating surrounding the antenna body, wherein the insulating coating has a dielectric constant less than a dielectric constant of the rubber material. The coating materials used include electrical shrink tubing, thermoplastic polycarbonate, butadiene rubber, low carbon rubber, isocyanate-based adhesives, polyethylene, insulating varnish, epoxy, TPE cellulose acetate, parylene, and insulating polyester varnish.

WO 2011/002440 A1 discloses a tire mountable apparatus including a first layer, a second layer, a middle layer disposed between the first layer and the second layer, and an electrical device embedded in the middle layer. The middle layer of the tire mountable apparatus completely surrounds the electrical device and is formed from a potting compound, which is chosen from epoxies, silicones, and urethanes.

US 2021/053306 A1 discloses a chemically treated, RFID equipped mesh tire label configured to be integrally incorporated within a vulcanized tire. The label comprises a mesh face layer configured to be adhered to an outer surface of an unvulcanized tire, a mesh backing layer attached to the mesh face layer, and an RFID device affixed between the mesh layers. The mesh layers comprise woven or non-woven materials being formed of a polyamide, polyester, polyethylene, polypropylene, or cotton.

WO 2016/053933 A1 discloses RFID labels incorporated in tires. The RFID labels comprise a face layer, one or more primer layers, an adhesive layer, an RFID component, and a liner. The adhesive layer is used to affix the RFID label onto the tire and comprises unsaturated rubber, acrylic adhesives and/or rubber-acrylic based hybrids.

US 9,361,571 B2 discloses a matrix of tags including a plurality of RFID identification tags having an identification layer, arranged on an object to be identified. The identification layer includes at least one chip and one antenna, a bonding face arranged on a wall of the object, a backing layer arranged on the side of the bonding face of the identification layer, a transfer layer, arranged on the side opposite to the backing layer relative to the identification layer, the transfer layer being provided for transferring the identification layer onto the object, and a protective layer, arranged between the identification layer and the transfer layer, provided for protecting the identification layer when the tag is put in place.

However, there is a need in the art for an easy-to-use system for mounting an electrical device to a tire. The present invention discloses an electrical device tag pack comprising an adhesive layer deposited onto a transfer layer, an electrical device deposited onto said adhesive layer and a tear-off cover in order to protect said tag. The electrical device tag pack of the invention provides a ready to use electrical device that can be directly applied onto the uncured rubber of a tire product without requiring further processing. The present invention also discloses a method for attaching an electrical device to a tire using said electrical device pack, which allows exact positioning of the electrical device on the desired location and in a desired alignment on the tire without overhandling the electrical device, such as an RFID tag, and causing damage.

### Brief Description of the Technical Drawings

Accompanying drawings are given solely for the purpose of exemplifying an electrical device pack, whose advantages over prior art were outlined above and will be explained in brief hereinafter.

The drawings are not meant to delimit the scope of protection as identified in the Claims, nor should they be referred to alone in an effort to interpret the scope identified in said Claims without recourse to the technical disclosure in the description of the present invention.
Figure 1 demonstrates a schematic of a top view (A) and sectional view (B) of an electrical device pack.
Figure 2 demonstrates a schematic of a method for mounting an electrical device onto uncured rubber.

### Detailed Description of the Present Invention

The present invention proposes an electrical device pack (5) for attaching an electrical device (1) to a tire.

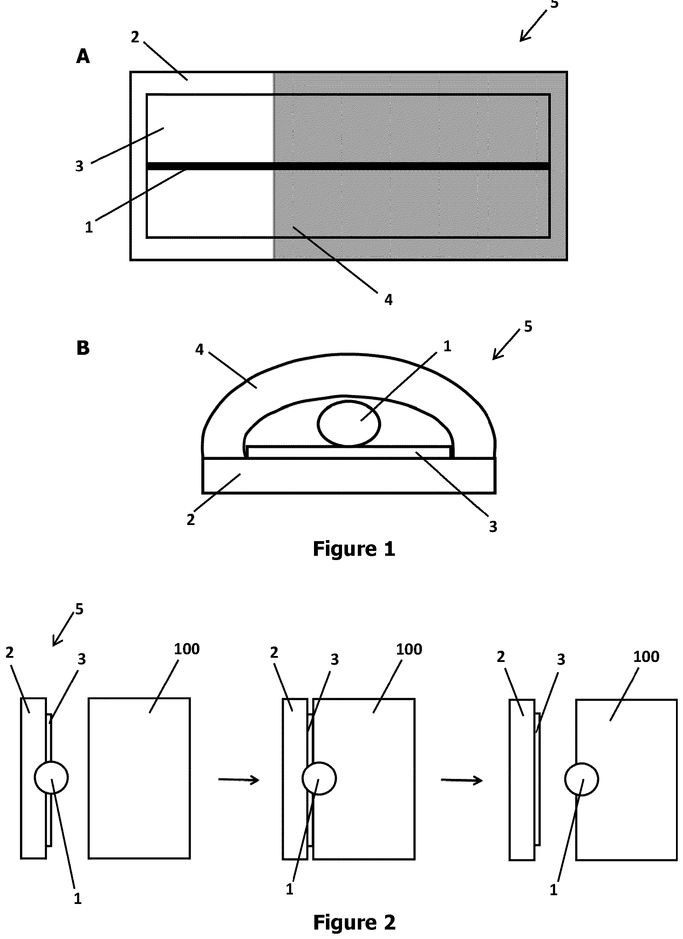

Figures 1A and 1B illustrate an electrical device tag pack (5) according to the present invention. Said electrical device pack (5) comprises an adhesive layer (3) deposited onto a transfer layer (2), an electrical device (1) deposited onto said adhesive layer (3) and a tear-off cover (4) in order to protect said electrical device (1).

Said electrical device (1) is an RFID transponder comprising an RFID chip and an antenna in operable communication for wirelessly communicating with external equipment, such an RFID reader. A coil-shaped spring antenna, plate-shaped antenna, and various types of rod-shaped antennas can be used as the antenna. In a storage part inside the RFID chip, identification information such as a manufacturing number and part number is stored. Said tag (1) is an electrical device that may be used to wirelessly transmit data to a remote receiver and/or to receive data from a remote transmitter by way of an antenna.

Said electrical device (1) comprises a tacky material that is pretreated with a tackifying solution in order to improve its adhesion to the rubber component of the tire. In a preferred embodiment of the invention, said tag is treated by dipping into a resorcinol formaldehyde latex (RFL) solution, as commonly used in the art. In alternative embodiments, resorcinol formaldehyde-free (RF-free) compositions, such as compositions containing acrylic resins and/or natural latex, can be used. In alternative embodiments, a rosin ester and/or rosin ester tackifier may be added to the dipping solution. In alternative embodiments, electrical device (1) coated by said tackifying solution can be dried in a 160°C oven.

However, the skilled person can appreciate that any method known in the art for improving the adhesion of components to rubber may be used in this application such that the electrical device (1) remains intact and adhered to or within the tire through the lifetime of the tire.

In accordance with the invention, said antenna of said RFID tag comprises at least one synthetic or biobased polymeric textile material. In a preferred embodiment of the invention, said textile material is a tacky material.

Said transfer layer (2) functions as a carrier for said electrical device (1). Said transfer layer (2) is made out of flexible material such as polyolefins, polyethylene terephthalate (PET), polyamides (PA), polyimides (PI), polyethylene naphthalate (PEN), flexible plastic films, cotton, paper, fiberglass or synthetic textiles. Said transfer layer (2) can be designed in a continuous or discontinuous form.

Said adhesive layer (3) covers the transfer layer (2) partially or completely and is used to attach the electrical device (1) to the transfer layer (2). Said adhesive layer (3) comprises aqueous or solvent-based adhesive components. Said adhesive layer (3) is designed so that it is compatible with the tackifying pretreatment of the to the electrical device (1), but it is not compatible with the rubber component of the tire, so that when the electrical device pack (5) is applied to the tire, only the electrical device (1) is attached to the tire and the rest of the electrical device pack (5) can be removed. In a preferred embodiment of the invention, said adhesive layer (3) contains at least one material selected from the group consisting of silicone adhesives, rubber adhesives, acrylic adhesives, and combinations thereof.

Said tear-off cover (4) functions as a physical barrier for the electrical device (1), in order to protect said electrical device from outside factors such as heat, light and moisture. Said tear-off cover (4) is made out of flexible material such as plastic films, textiles, or paper. The tear-off cover (4) is removed manually or by automated systems prior to the application of the electrical device (1) to the tire.

Figure 2 demonstrates a method for mounting an electrical device (1) onto a tire. The electrical device (1) is mounted directly onto uncured rubber (100) of a tire before the curing process so that it is embedded among the layers comprising the final tire product. The tire types which can be equipped with the electrical device (1) include but are not limited to, bias tires, belted bias tires, radial tires, solid tires, semi-pneumatic tires, pneumatic tires, and airless tires. Generally, all tires include an outer tread, a bead which contacts a rim upon installation of the tire, and sidewalls that extend between the tread and bead. The method is advantageous in that it allows exact positioning of the electrical device (1) on the desired location and in a desired alignment on the tire without overhandling the electrical device (1) and causing damage.

It is most advantageous to place the electrical device (1) in positions that have minimum tensile and compressive strains during driving conditions. Preferably, the electrical device (1) is mounted between the carcass layer and the outer rubber layer at upper, middle, or lower sidewall area in the circumferential direction of tire. Good readability of the tag is obtained in these positions due to the thin gauge and the distance from the metallic components of the tire. In another embodiment of the invention, the electrical device (1) is mounted onto the bead area of the tire, including apex rubber and bead ring. The electrical device (1) may be mounted on the apex rubber or in the apex rubber in cases where the apex rubber is composed of two or more parts. These positions are advantageous due to reduced deformation in horizontal direction in driving conditions. In another embodiment of the invention, the electrical device (1) is mounted between the apex rubber and bead ring apex, wherein the electrical device (1) is mounted first on the upper side of the rubberized bead ring and the apex rubber is mounted onto the bead ring and the tag (1) This position is advantageous due to reduced deformation in all directions in driving conditions.

The method for mounting an electrical device (1) onto a tire comprises the steps of:
- Obtaining an electrical device pack (5),
- Removing the tear-off cover (4) manually or by automated systems,
- Applying electrical device pack (5), now comprising transfer layer (2), adhesive layer (3) and electrical device (1), onto the desired position on uncured rubber (100),
- Holding electrical device pack (5) in this position on uncured rubber (100) to ensure adhesion,
- Removing the transfer layer (2) and adhesive layer (3), leaving electrical device (1) mounted onto uncured rubber (100).

It is important to note that the tackiness strength of uncured rubber (100) is higher than the tackiness strength of said electrical device (1) and the tackiness strength of said electrical device (1) is higher than the tackiness strength of said adhesive layer (3), so that said electrical device (1) remains mounted onto said uncured rubber (100). In a preferred embodiment of the invention, uncured rubber (100) and electrical device (1) adhesion level is between 100-250 N, while electrical device (1) and adhesive layer (3) adhesion level is between 2-50 N.

From this point forward, other elements of the tire, such as tire cords, are be added onto the uncured rubber (100), and tire is cured in order to get the final tire product having an electrical device (1), such as an RFID transponder. Thereafter, the tire can be identified by the use of an RFID reader, which allows for tracking the tire in a manufacturing or production system, monitoring the location of the tire, and performing inventory operations.

The skilled person can appreciate that the electrical device pack (5) of the present invention can be used with other rubber or rubber-based articles in addition to tires. Other rubber-based articles include, but are not limited to, suspension components, cushions, shoe soles, hoses, hockey pucks, conveyor belts, musical mouth pieces and bowling balls.

In a nutshell, the present invention proposes an electronic device pack (5) comprising an adhesive layer (3) deposited onto a transfer layer (2), an electronic device (1) deposited onto said adhesive layer (3) and a tear-off cover (4) covering said electronic device (1).

In one variation of the present invention, said electronic device (1) comprises at least one tacky material.

In a further variation of the present invention, said tacky material is a material that is treated at least once with a solution, and wherein said solution contains at least one material selected from the group comprised of resorcinol formaldehyde latex solution, acrylic resin solution, rosin ester solution, natural latex solution, and combinations thereof.

In accordance with the present invention, said electronic device (1) is an RFID transponder.

Further, said RFID transponder comprises an RFID chip and an antenna in operable communication.

The antenna of said RFID tag comprises at least one synthetic or biobased polymeric textile material.

Further, said antenna of the RFID tag comprises at least one tacky material.

In a further variation of the present invention, said transfer layer (2) includes at least one material selected from the group consisting of polyolefins, polyethylene terephthalate (PET), polyamides (PA), polyimides (PI), polyethylene naphthalate (PEN), flexible plastic films, cotton, paper, fiberglass, synthetic textiles, and combinations thereof.

In a further variation of the present invention, said adhesive layer (3) contains at least one material selected from the group consisting of silicone adhesives, rubber adhesives, acrylic adhesives, and combinations thereof.

In a further variation of the present invention, said transfer layer (2) is configured to protect said tag (1) from outside factors such as heat, light, and moisture.

The present invention also proposes a method for mounting an electrical device (1) onto a tire comprising the steps of:
a) obtaining an electrical device pack (5) as described in any one of Claims 1 to 10,
b) removing the tear-off cover (4) manually or by automated systems,
c) applying electrical device pack (5), now comprising transfer layer (2), adhesive layer (3) and electrical device (1), onto the desired position on uncured rubber (100),
d) holding electrical device pack (5) in this position on uncured rubber (100) to ensure adhesion, and
e) removing the transfer layer (2) and adhesive layer (3), leaving electrical device (1) mounted onto uncured rubber (100).

In a variation of the present invention, the tackiness strength of uncured rubber (100) is higher than the tackiness strength of said electrical device (1) and the tackiness strength of said electrical device (1) is higher than the tackiness strength of said adhesive layer (3).

In a further variation of the present invention, the uncured rubber (100) and electrical device (1) adhesion level is between 100-250 N, while the electrical device (1) and adhesive layer (3) adhesion level is between 2-50 N.

## Claims

1. An electronic device pack (5) to be applied to vehicle tires comprising an adhesive layer (3) deposited onto a transfer layer (2), an electronic device (1) deposited onto said adhesive layer (3) and a tear-off cover (4) covering said electronic device (1), wherein said electronic device (1) is an RFID transponder, and said RFID transponder comprises an RFID chip and an antenna in operable communication; **characterized in that** said antenna of said RFID tag comprises at least one synthetic or biobased polymeric textile material, said antenna of the RFID tag comprises at least one tacky material, and said tacky material is pretreated with a tackifying solution in order to improve its adhesion to the rubber component of the tire.

2. An electronic device pack (5) as described in Claim 1, wherein said electronic device (1) comprises at least one tacky material.

3. An electronic device pack (5) as described in Claim 2, wherein said tacky material is a material that is treated at least once with a solution, and wherein said solution contains at least one material selected from the group comprised of resorcinol formaldehyde latex solution, acrylic resin solution, rosin ester solution, natural latex solution, and combinations thereof.

4. An electronic device pack (5) as described in any preceding Claim, wherein said transfer layer (2) includes at least one material selected from the group consisting of polyolefins, polyethylene terephthalate (PET), polyamides (PA), polyimides (PI), polyethylene naphthalate (PEN), flexible plastic films, cotton, paper, fiberglass, synthetic textiles, and combinations thereof.

5. An electronic device pack (5) as described in any preceding Claim, wherein said adhesive layer (3) contains at least one material selected from the group consisting of silicone adhesives, rubber adhesives, acrylic adhesives, and combinations thereof.

6. An electronic device pack (5) as described in any preceding Claim, wherein said transfer layer (2) is configured to protect said tag (1) from outside factors such as heat, light, and moisture.

7. A method for mounting an electrical device (1) onto a tire comprising the steps of:
a) obtaining an electrical device pack (5) as described in any one of Claims 1 to 6,
b) removing the tear-off cover (4) manually or by automated systems,
c) applying electrical device pack (5), now comprising transfer layer (2), adhesive layer (3) and electrical device (1), onto the desired position on uncured rubber (100),
d) holding electrical device pack (5) in this position on uncured rubber (100) to ensure adhesion, and
e) removing the transfer layer (2) and adhesive layer (3), leaving electrical device (1) mounted onto uncured rubber (100).

8. A method for mounting an electrical device (1) onto a tire as described in Claim 7, wherein the tackiness strength of uncured rubber (100) is higher than the tackiness strength of said electrical device (1) and the tackiness strength of said electrical device (1) is higher than the tackiness strength of said adhesive layer (3).

9. A method for mounting an electrical device (1) onto a tire as described in Claim 8, wherein the uncured rubber (100) and electrical device (1) adhesion level is between 100-250 N, while the electrical device (1) and adhesive layer (3) adhesion level is between 2-50 N.

## Patentansprüche

1. Eine elektronische Vorrichtungsanordnung (5) zur Anwendung auf Fahrzeugreifen, umfassend eine Haftschicht (3), die auf eine Trägerschicht (2) aufgebracht ist; eine elektronische Vorrichtung (1), die auf besagter Haftschicht (3) aufgebracht ist, und eine Abziehhülle (4), die besagte elektronische Vorrichtung (1) abdeckt, wobei besagte elektronische Vorrichtung (1) ein RFID-Transponder ist und besagter RFID-Transponder einen RFID-Chip und eine Antenne in funktionaler Verbindung umfasst; **dadurch gekennzeichnet, dass** besagte Antenne des RFID-Tags mindestens ein synthetisches oder biobasiertes polymeres Textilmaterial aufweist, besagte Antenne des RFID-Tags mindestens ein klebriges Material aufweist und besagtes klebriges Material mit einer haftvermittelnden Lösung vorbehandelt ist, um dessen Haftung an der Gummikomponente des Reifens zu verbessern.

2. Eine elektronische Vorrichtungsanordnung (5), wie im Anspruch 1 beschrieben, **dadurch gekennzeichnet, dass** die elektronische Vorrichtung (1) mindestens ein klebriges Material aufweist.

3. Eine elektronische Vorrichtungsanordnung (5), wie im Anspruch 2 beschrieben, wobei das besagte klebrige Material ein Material ist, das mindestens einmal mit einer Lösung behandelt wurde, und wobei die Lösung mindestens ein Material enthält, das aus der Gruppe ausgewählt ist, die aus Resorcin-Formaldehyd-Latexlösung, Acrylharzlösung, Kolophoniumesterlösung, Naturlatexlösung und Kombinationen davon besteht.

4. Eine elektronische Vorrichtungsanordnung (5), wie in einem der vorhergehenden Ansprüche beschrieben, wobei die besagte Trägerschicht (2) mindestens ein Material enthält, das aus der Gruppe ausgewählt ist, die aus Polyolefinen, Polyethylenterephthalat (PET), Polyamiden (PA), Polyimiden (PI), Polyethylennaphthalat (PEN), flexiblen Kunststofffolien, Baumwolle, Papier, Glasfasern, synthetischen Textilien und Kombinationen davon besteht.

5. Eine elektronische Vorrichtungsanordnung (5), wie in einem der vorhergehenden Ansprüche beschrieben, wobei die besagte Haftschicht (3) mindestens ein Material enthält, das aus der Gruppe ausgewählt ist, die aus Silikonklebstoffen, Kautschukklebstoffen, Acrylklebstoffen und Kombinationen davon besteht.

6. Eine elektronische Vorrichtungsanordnung (5), wie in einem der vorhergehenden Ansprüche beschrieben, wobei die besagte Trägerschicht (2) so konfiguriert ist, dass sie den besagten Tag (1) vor äußeren Faktoren wie Wärme, Licht und Feuchtigkeit schützt.

7. Ein Verfahren zur Anbringung einer elektrischen Vorrichtung (1) auf einem Reifen, das die folgenden Schritte umfasst:
a) Bereitstellung einer elektrischen Vorrichtungsanordnung (5) wie in einem der Ansprüche 1 bis 6 beschrieben,
b) Entfernen der Abziehhülle (4) von Hand oder durch automatisierte Systeme,
c) Aufbringen der elektrischen Vorrichtungsanordnung (5), die nun aus der Trägerschicht (2), der Haftschicht (3) und der elektrischen Vorrichtung (1) besteht, an der gewünschten Stelle auf dem unvulkanisierten Gummi (100),
d) Halten der elektrischen Vorrichtungsanordnung (5) in dieser Position auf dem unvulkanisierten Gummi (100), um die Haftung zu gewährleisten, und
e) Entfernen der Trägerschicht (2) und der Haftschicht (3), so dass die elektrische Vorrichtung (1) auf dem unvulkanisierten Gummi (100) befestigt bleibt.

8. Ein Verfahren zum Anbringen einer elektrischen Vorrichtung (1) auf einem Reifen, wie im Anspruch 7 beschrieben, wobei die Haftkraft des unvulkanisierten Gummis (100) höher ist als die Haftkraft der elektrischen Vorrichtung (1) und die Haftkraft der elektrischen Vorrichtung (1) höher ist als die Haftkraft der Haftschicht (3).

9. Ein Verfahren zum Anbringen einer elektrischen Vorrichtung (1) auf einem Reifen, wie im Anspruch 8 beschrieben, wobei die Haftfestigkeit zwischen unvulkanisiertem Gummi (100) und elektrischer Vorrichtung (1) 100-250 N beträgt, während die Haftfestigkeit zwischen elektrischer Vorrichtung (1) und Haftschicht (3) 2-50 N beträgt.

## Revendications

1. Un ensemble dispositif électronique (5) destiné à être appliqué sur des pneus de véhicule, comprenant une couche adhésive (3) déposée sur une couche de transfert (2), un dispositif électronique (1) disposé sur ladite couche adhésive (3), et un film de protection détachable (4) recouvrant ledit dispositif électronique (1), ledit dispositif électronique (1) étant un transpondeur RFID et ledit transpondeur RFID comprend une puce RFID et une antenne en communication fonctionnelle ; **caractérisé en ce que** ladite antenne du tag RFID comprend au moins un matériau textile polymère, d'origine synthétique ou biosourcée, ladite antenne du tag RFID comprend au moins un matériau poisseux, et ledit matériau poisseux est préalablement traité à l'aide d'une solution tackifiante afin d'optimiser son adhérence au caoutchouc du pneu.

2. Un ensemble dispositif électronique (5) selon la revendication 1, dans lequel ledit dispositif électronique (1) comprend au moins un matériau poisseux.

3. Un ensemble dispositif électronique (5) selon la revendication 2, dans lequel ledit matériau poisseux un matériau qui a été traité au moins une fois avec une solution, et dans lequel ladite solution contenant au moins une substance choisie dans le groupe constitué de : solution de latex résorcine-formaldéhyde, solution de résine acrylique, solution d'ester de colophane, solution de latex naturel, ou leurs combinaisons.

4. Un ensemble dispositif électronique (5) selon l'une quelconque des revendications précédentes, dans lequel ladite couche de transfert (2) comprend au moins un matériau choisi dans le groupe constitué de polyoléfines, polyéthylène téréphtalate (PET), polyamides (PA), polyimides (PI), polyéthylène naphtalate (PEN), films plastiques souples, coton, papier, fibre de verre, textiles synthétiques, ou toute combinaison de ceux-ci.

5. Un ensemble dispositif électronique (5) selon l'une quelconque des revendications précédentes, dans lequel ladite couche adhésive (3) contient au moins un matériau choisi dans le groupe constitué d'adhésifs siliconés, d'adhésifs à base de caoutchouc, d'adhésifs acryliques, ou de toute combinaison de ceux-ci.

6. Un ensemble dispositif électronique (5) selon l'une quelconque des revendications précédentes, dans lequel ladite couche de transfert (2) est conçue pour protéger ledit tag (1) contre des facteurs environnementaux tels que la chaleur, la lumière et l'humidité.

7. Un procédé de montage d'un dispositif électronique (1) sur un pneu, comprenant les étapes suivantes :
a) obtenir un ensemble dispositif électronique (5) tel que décrit dans l'une quelconque des revendications 1 à 6,
b) retirer le film de protection détachable (4) manuellement ou au moyen de systèmes automatisés,
c) appliquer l'ensemble dispositif électronique (5), comprenant désormais la couche de transfert (2), la couche adhésive (3) et le dispositif électronique (1), à l'emplacement souhaité sur le caoutchouc non vulcanisé (100),
d) maintenir l'ensemble dispositif électronique (5) à cette position sur le caoutchouc non vulcanisé (100) afin d'assurer l'adhérence, et
e) retirer la couche de transfert (2) et la couche adhésive (3), de manière à laisser le dispositif électronique (1) monté sur le caoutchouc non vulcanisé (100).

8. Un procédé de montage d'un dispositif électronique (1) sur un pneu selon la revendication 7, dans lequel la force d'adhérence du caoutchouc non vulcanisé (100) est supérieure à celle du dispositif électronique (1) et la force d'adhérence dudit dispositif électrique (1) est supérieure à celle de ladite couche adhésive (3).

9. Un procédé de montage d'un dispositif électronique (1) sur un pneu selon la revendication 8, dans lequel le niveau d'adhérence entre le caoutchouc non vulcanisé (100) et le dispositif électronique (1) est compris entre 100 et 250 N, tandis que celui entre le dispositif électronique (1) et la couche adhésive (3) est compris entre 2 et 50 N.
